(19) **Europäisches Patentamt / European Patent Office / Office européen des brevets**

(11) **EP 3 699 940 B1**

(12) # EUROPEAN PATENT SPECIFICATION

(45) Date of publication and mention of the grant of the patent:
**23.10.2024 Bulletin 2024/43**

(21) Application number: **18867342.0**

(22) Date of filing: **11.10.2018**

(51) International Patent Classification (IPC):
*H01G 11/34* (2013.01)    *H01G 11/38* (2013.01)
*H01M 4/583* (2010.01)    *H01M 4/36* (2006.01)
*H01G 11/44* (2013.01)    *H01G 11/42* (2013.01)
*H01G 11/36* (2013.01)    *H01G 11/24* (2013.01)
*C01B 32/348* (2017.01)    *C01B 32/336* (2017.01)
*C01B 32/22* (2017.01)    *H01M 10/052* (2010.01)

(52) Cooperative Patent Classification (CPC):
**H01G 11/38; H01G 11/24; H01G 11/36; H01G 11/42; H01M 4/366; H01M 4/583; H01M 10/052; H01G 11/44; Y02E 60/10**

(86) International application number:
**PCT/JP2018/037851**

(87) International publication number:
**WO 2019/078073 (25.04.2019 Gazette 2019/17)**

(54) **COMPOSITE BODY, ELECTRODE MATERIAL FOR ELECTRICITY STORAGE DEVICES, AND ELECTRICITY STORAGE DEVICE**

VERBUNDKÖRPER, ELEKTRODENMATERIAL FÜR ELEKTRIZITÄTSSPEICHERVORRICHTUNGEN UND ELEKTRIZITÄTSSPEICHERVORRICHTUNG

CORPS COMPOSITE, MATÉRIAU D'ÉLECTRODE POUR DISPOSITIFS DE STOCKAGE D'ÉLECTRICITÉ, ET DISPOSITIF DE STOCKAGE D'ÉLECTRICITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2017 JP 2017200300**

(43) Date of publication of application:
**26.08.2020 Bulletin 2020/35**

(73) Proprietor: **Sekisui Chemical Co., Ltd.**
**Osaka-shi, Osaka 530-8565 (JP)**

(72) Inventors:
• **OHARA, Shunji**
**Hasuda-shi**
**Saitama 349-0198 (JP)**
• **WADA, Takuya**
**Mishima-gun**
**Osaka 618-0021 (JP)**
• **SASAGAWA, Naoki**
**Mishima-gun**
**Osaka 618-0021 (JP)**

(74) Representative: **Ter Meer Steinmeister & Partner Patentanwälte mbB**
**Nymphenburger Straße 4**
**80335 München (DE)**

(56) References cited:
**WO-A1-2017/090553**    **WO-A1-2017/090553**
**WO-A2-2016/077880**    **CN-A- 105 271 176**
**CN-A- 106 683 891**    **JP-A- 2005 347 517**
**JP-A- 2005 347 517**    **US-A1- 2005 262 674**
**US-A1- 2009 059 474**

• **CHEN X ET AL: "Preparation and structure analysis of carbon/carbon composite made from phenolic resin impregnation into exfoliated graphite", JOURNAL OF PHYSICS AND CHEMISTRY OF SOLIDS, PERGAMON PRESS, LONDON, GB, vol. 67, no. 5-6, 1 May 2006 (2006-05-01), pages 1141 - 1144, XP028048651, ISSN: 0022-3697, [retrieved on 20060501], DOI: 10.1016/J.JPCS.2006.01.087**

EP 3 699 940 B1

## Description

### TECHNICAL FIELD

The present invention relates to a composite body containing a carbon material having a graphene layered structure and fine particles, an electrode material for electricity storage devices using the composite body, and an electricity storage device.

### BACKGROUND ART

Conventionally, carbon materials such as graphite, activated carbon, carbon nanofibers, and carbon nanotubes are widely used as electrode materials of an electricity storage device such as a capacitor and a lithium ion secondary battery from environmental aspects.

For example, Patent Document 1 below discloses a non-aqueous electrolyte electricity-storage element using porous carbon having pores having a three-dimensional network structure as an electrode material. In Patent Document 1, the porous carbon is used as a positive-electrode active material capable of inserting and releasing anions. Thus, Patent Document 1 describes that a pore volume of the porous carbon is preferably 0.2 ml/g or more.

Patent Document 2 below discloses a capacitor electrode material including a resin-remaining partially exfoliated graphite having a structure in which graphite is partially exfoliated, with part of the resin remaining; and a binder resin. In Patent Document 2, the resin-remaining partially exfoliated graphite is obtained by pyrolyzing a resin in a composition in which the resin is fixed to graphite or primary exfoliated graphite by grafting or adsorption.

Patent Document 3 below discloses a capacitor electrode material including a composite body of a carbon material having a graphene layered structure and fine particles. In Patent Document 3, a specific surface area of the composite body measured by a methylene blue adsorption method is 1100 $m^2$/g or more. JP 2005 347517 A discloses a composite body comprised in the electrode material for electricity storage devices, comprising a carbon material having a graphene layered structure and fine particles, the composite body having mesopores.

US 2009/059474 A1 discloses a composite body in which the carbon material is exfoliated graphite.

WO 2017/090553 A1 describes a carbon material partially exfoliated.

### Related Art Documents

#### Patent Documents

Patent Document 1: WO 2016/143423 A
Patent Document 2: WO 2015/098758 A
Patent Document 3: WO 2017/090553 A

### SUMMARY OF THE INVENTION

#### PROBLEMS TO BE SOLVED BY THE INVENTION

In recent years, in the field of electricity storage devices such as capacitors and lithium ion secondary batteries, a further increase in their capacity is demanded. Therefore, even with an electricity storage device using an electrode material as described in Patent Documents 1 to 3, the capacity is still insufficient. In addition, in the electricity storage device using an electrode material as described in Patent Documents 1 to 3, the rate characteristics are not sufficient.

An object of the present invention is to provide a composite body capable of increasing the capacity of an electricity storage device and improving rate characteristics, an electrode material for electricity storage devices using the composite body, and an electricity storage device.

#### MEANS FOR SOLVING THE PROBLEMS

A composite body according to the present invention is defined by the features of claim 1

According to the present invention, the carbon material is partially exfoliated graphite which has a graphite structure and in which graphite is partially exfoliated.

In yet another specific aspect of the composite body according to the present invention, the fine particles are at least one kind selected from the group consisting of activated carbon, carbon black and graphene oxide.

In still another specific aspect of the composite body according to the present invention, in the composite body, the fine particles exist between graphene layers of the carbon material having a graphene layered structure.

According to the present invention, a median size of the fine particles is 10 nm or more and less than 20 um.

In still another specific aspect of the composite body according to the present invention, a weight ratio of the fine particles to the carbon material having a graphene layered structure is 1/20 or more and 2 or less.

In still another specific aspect of the composite body according to the present invention, the carbon material having a graphene layered structure includes a resin and/or a carbonization product derived from a resin.

In still another specific aspect of the composite body according to the present invention, a content of the resin and/or the carbonization product derived from a resin in the carbon material having a graphene layered structure is 1% by weight or more and 80% by weight or less.

An electrode material for electricity storage devices according to the present invention contains the composite body configured according to the present invention.

An electricity storage device according to the present invention includes an electrode including the electrode material for electricity storage devices configured according to the present invention.

**EFFECT OF THE INVENTION**

The present invention can provide a composite body capable of increasing the capacity of an electricity storage device and improving rate characteristics, an electrode material for electricity storage devices using the composite body, and an electricity storage device.

**MODE(S) FOR CARRYING OUT THE INVENTION**

Hereinafter, the details of the present invention will be described.

[Composite body]

A composite body of the present invention contains a carbon material having a graphene layered structure and fine particles. The composite body has mesopores. A volume of the mesopores is 0.15 mL/g or more. A BET specific surface area of the composite body is 900 $m^2$/g or more.

In this specification, a mesopore refers to a pore having a pore diameter of 2 nm or more and 50 nm or less. The volume of the mesopores refers to the sum of the volume of all mesopores (total mesopore volume) in the composite body. The volume of mesopores can be measured, for example, by the BJH (Barret, Joyner, Hallender) method which is a gas adsorption method.

In the composite body of the present invention, as described above, the volume of the mesopores is 0.15 mL/g or more, and the BET specific surface area is increased to 900 $m^2$/g or more. Since the specific surface area is increased, the composite body of the present invention can effectively increase the capacity of the electricity storage device and improve the rate characteristics when used for an electrode material of the electricity storage device.

The rate characteristics correspond to a digitized difference in electrostatic capacity obtained when the electricity storage device is charged and discharged at different current application rates and correspond to an electrostatic capacity at a high charge/discharge rate divided by an electrostatic capacity at a low charge/discharge rate. It shows that as the rate characteristics exhibit a higher value, even at a high charge/discharge rate, the electrostatic capacity that is the same as that at a low charge/discharge rate can be exhibited, and it is suggested that the electrode can be charged and discharged at high speed.

The composite body of the present invention may further contain a resin and/or a carbonization product derived from a resin. In this case, the volume of mesopores and the BET specific surface area refer to the volume of mesopores and the BET specific surface area of the composite body containing the resin and/or the carbonization product derived from a resin.

In the present invention, the BET specific surface area of the composite body is 900 $m^2$/g or more, preferably 950 $m^2$/g or more, and more preferably 1000 $m^2$/g or more, and preferably 3500 $m^2$/g or less, and more preferably 3000 $m^2$/g or less.

In the present invention, the volume of mesopores is 0.15 mL/g or more and preferably 0.20 mL/g or more. The upper limit of the volume of mesopores is not particularly limited, but is preferably 20 mL/g or less. When the volume of mesopores is equal to or more than the above lower limit, an electrolyte is more easily permeated to a surface of the composite body, and a wide specific surface area can be used more effectively, so that the capacity of the electricity storage device can be further increased.

In the composite body of the present invention, pores such as micropores may be provided in addition to the mesopores. The volume of micropores is preferably 1.0 mL/g or less and more preferably 0.8 mL/g or less. The lower limit of the volume of micropores is not particularly limited, but is preferably 0.01 mL/g or more. The micropores contribute to an increase in the specific surface area; however, since the pore diameter is small, an electrolyte is hard to be penetrated, and the micropores have a surface area that is hard to be utilized as a battery. When the volume of micropores is equal to or less than the above upper limit, an electrolyte is more easily permeated to a surface of the composite body, and a wide specific surface area can be used more effectively, so that the capacity of the electricity storage device can be further increased.

In the present specification, micropores mean those having a pore diameter of less than 2 nm. The volume of micropores can be measured, for example, by the BJH (Barret, Joyner, Hallender) method which is a gas adsorption method. Furthermore, the volume of the micropores refers to the sum of the volume of all micropores in the composite body.

(Carbon material having graphene layered structure)

In the present invention, examples of the carbon material having a graphene layered structure include exfoliated graphite.

Graphite is a stack of a plurality of graphene sheets. The number of stacked layers of graphite graphene sheets is usually about 100,000 to 1,000,000. As the graphite, natural graphite, artificial graphite, expanded graphite, or the like can be used, for example. A distance between graphene layers is larger at a higher ratio in expanded graphite than in common graphite. Therefore, it is preferable to use expanded graphite as the graphite.

Exfoliated graphite is obtained by subjecting original graphite to exfoliation treatment, and refers to a graphene sheet stack thinner than the original graphite. The number of stacked layers of graphene sheets in the exfoliated graphite is to be smaller than that in the original graphite. The exfoliated graphite may be oxidized exfoliated graphite.

In exfoliated graphite, the number of stacked layers of graphene sheets is not particularly limited, but is preferably 2 or more, more preferably 5 or more, and preferably 1000 or less, and more preferably 500 or less. When the number of stacked layers of graphene sheets is equal to or more than the above lower limit, scrolling of exfoliated graphite in a liquid and stacking of exfoliated graphite are suppressed, and thus conductivity of exfoliated graphite can be further enhanced. When the number of stacked graphene sheets is equal to or less than the above upper limit, the specific surface area of the exfoliated graphite can be further increased.

The exfoliated graphite is partially exfoliated graphite having a structure in which graphite is partially exfoliated.

More specifically, "graphite being partially exfoliated" refers to, in a graphene stack, a graphite interlaminar distance being enhanced, from an end edge to the inside to some extent, that is, refers to a portion of graphite being exfoliated at the end edge (edge portion). Furthermore, this expression refers to graphite layers being stacked in a portion on the center side similar to original graphite or primary exfoliated graphite. Therefore, a portion where graphite is partially exfoliated at the end edge is continuous with the portion on the center side. In addition, the partially exfoliated graphite may include one in which graphite at the end edge is exfoliated.

As described above, in the partially exfoliated graphite, graphite layers are stacked in the portion on the center side similar to the original graphite or primary exfoliated graphite. Thus, the partially exfoliated graphite has a higher degree of graphitization than conventional graphene oxide and carbon black, and is excellent in conductivity. Therefore, when the partially exfoliated graphite is used for an electrode of an electricity storage device, electron conductivity in the electrode can be further increased, and charging and discharging with a larger current become possible.

In the partially exfoliated graphite, a presence ratio of the edge portion where graphite is partially exfoliated and a non-exfoliated central portion is preferably 2 : 1 to 1 : 60. In this case, the edge portion may have a horizontally indefinite shape. When the presence ratio of the edge portion and the central portion is in the above range, both a larger specific surface area and higher conductivity can be realized simultaneously.

The partially exfoliated graphite can be obtained, for example, by preparing a composition which contains graphite or primary exfoliated graphite and a resin and in which the resin is fixed to graphite or primary exfoliated graphite by grafting or adsorption and pyrolyzing the resin contained in the composition. In the pyrolyzation of the resin, the pyrolyzation may be performed while leaving a portion of the resin, or the resin may be completely pyrolyzed. In the pyrolyzing step, a portion of the resin contained in the partially exfoliated graphite may be carbonized, and the resin of the partially exfoliated graphite described in the present specification refers to a resin and/or a carbonization product derived from a resin.

More specifically, the partially exfoliated graphite can be produced, for example, by the same method as the method for producing exfoliated graphite/resin composite material described in WO 2014/034156. As described above, in the pyrolyzation of the resin, the pyrolyzation may be performed while leaving a portion of the resin, thus obtaining resin-remaining partially exfoliated graphite, or the resin may be completely pyrolyzed. As the graphite described above, it is preferable to use expanded graphite because graphite can be more easily exfoliated.

The primary exfoliated graphite widely includes exfoliated graphite obtained by exfoliating graphite by various methods. The primary exfoliated graphite may be partially exfoliated graphite. The primary exfoliated graphite is obtained by exfoliating graphite, so that its specific surface area is to be larger than that of graphite.

The resin described above is not particularly limited and is preferably a polymer of a radical polymerizable monomer. In this case, the resin may be a homopolymer of one radical polymerizable monomer or a copolymer of a plurality of radical polymerizable monomers. The radical polymerizable monomer is not particularly limited as long as it is a monomer having a radical polymerizable functional group.

Examples of the radical polymerizable monomer include styrene, methyl $\alpha$-ethylacrylate, methyl $\alpha$-benzylacrylate, methyl $\alpha$-[2,2-bis(carbomethoxy)ethyl]acrylate, dibutyl itaconate, dimethyl itaconate, dicyclohexyl itaconate, $\alpha$-methylene-5-valerolactone, $\alpha$-methylstyrene, $\alpha$-substituted acrylates comprising $\alpha$-acetoxystyrene, vinyl monomers having a glycidyl group or a hydroxyl group such as glycidyl methacrylate, 3,4-epoxycyclohexylmethyl methacrylate, hydroxyethyl methacrylate, hydroxyethyl acrylate, hydroxypropyl acrylate, and 4-hydroxybutyl methacrylate; vinyl monomers having an amino group such as allylamine, diethylaminoethyl (meth)acrylate, and dimethylaminoethyl (meth)acrylate; monomers having a carboxyl group such as methacrylic acid, maleic anhydride, maleic acid, itaconic acid, acrylic acid, crotonic acid, 2-acryloyloxyethyl succinate, 2-methacryloyloxyethyl succinate, and 2-methacryloyloxyethylphthalic acid; monomers having a phosphate group such as Phosmer (registered trademark) M, Phosmer (registered trademark) CL, Phosmer (registered trademark) PE, Phosmer (registered trademark) MH, and Phosmer (registered trademark) PP manufactured by Uni-Chemical Co., Ltd.; monomers having an alkoxysilyl group such as vinyltrimethoxysilane and 3-methacryloxypropyltrimethoxysilane; and (meth)acrylate monomers having an alkyl group, a benzyl group, or the like.

Examples of the resin to be used include polyethylene glycol, polypropylene glycol, polyglycidyl methacrylate, polyvinyl acetate, polybutyral (butyral resin), poly(meth)acrylate, and polystyrene.

As the resin described above, polyethylene glycol, polypropylene glycol and polyvinyl acetate can be preferably used. When polyethylene glycol, polypropylene glycol and polyvinyl acetate are used, the specific surface area of partially exfoliated graphite can be further increased. The resin type can be appropriately selected in view of the affinity to a solvent used.

The amount of the resin remaining in the partially exfoliated graphite is preferably 2 to 350 parts by weight, more preferably 15 to 250 parts by weight, and still more preferably 10 to 200 parts by weight, relative to 100 parts by weight of the partially exfoliated graphite. When the amount of the remaining resin or the amount of a carbonization product derived from the remaining resin is adjusted to be within the above range, the specific surface area of the partially exfoliated graphite can be further increased.

The amount of the resin remaining in the partially exfoliated graphite is preferably 1% by weight or more and more preferably 3% by weight or more and preferably 80% by weight or less, more preferably 70% by weight or less, and further preferably 60% by weight or less. When the amount of the resin is equal to or more than the above lower limit and equal to or less than the above upper limit, battery characteristics of the electricity storage device can be further enhanced.

The resin amount can also be adjusted to a proper amount by removing a portion of the resin remaining in the partially exfoliated graphite. At this time, a removal method by heating, chemical treatment or the like can be used, and the structure can be modified partially.

In the case of using such resin-remaining partially exfoliated graphite, the remaining resin or carbonization product can be used as it is as the resin or carbonization product contained in the composite body of the present invention. In the resin-remaining partially exfoliated graphite, the resin is fixed to the partially exfoliated graphite by grafting or adsorption. A portion or all of the resin is present between graphene layers of the partially exfoliated graphite. Therefore, in the composite body of the present invention, the resin may be fixed to the carbon material having a graphene layered structure by grafting or adsorption, or a portion or all of the resin may be present between the graphene layers.

The composite body of the present invention is not limited to the resin-remaining partially exfoliated graphite but may be a material in which a carbon material having a graphene layered structure, such as graphite and exfoliated graphite, and a resin form a composite. As the carbon material having a graphene layered structure, the partially exfoliated graphite from which a resin is completely removed by pyrolyzation is obtained, and then the partially exfoliated graphite may be formed into a composite with another resin and used.

(Fine particles)

The composite body of the present invention contains fine particles. Fine particles are not limited in particular, but are preferably fine particles on which ions can be physically adsorbed and desorbed and/or fine particles having conductivity, namely conductive fine particles. Specifically, activated carbon, carbon black, graphene oxide, graphite, graphite oxide, metal oxides such as titanium oxide, zeolite oxide, or polyacids such as tungstophosphoric acid, or the like can be used. These fine particles may be used alone, or a plurality of these fine particles may be used in combination.

The median size of the fine particles is preferably 10 nm or more and less than 20 um. When the median size of fine particles is too small, fine particles may be incapable of contributing to the maintenance of the structure such as the maintenance of the interlaminar distance of a composite body. When the median size of fine particles is too large, fine particles may be incapable of being inserted between layers of a carbon material and the like. The median size of the fine particles is more preferably 20 nm or more, still more preferably 30 nm or more, and more preferably 15 μm or less, and still more preferably 10 um or less. The median size is a value (d50) calculated from volume-based distribution by a laser diffraction method using a laser diffraction/scattering particle size distribution analyzer.

The shape of fine particles may not be limited to spherical form, but may be various shapes such as crushed form, elliptic form, and flake form.

A weight ratio of the fine particles to the carbon material having a graphene layered structure is preferably 1/20 or more and 2 or less. When the weight of a carbon material having a graphene layered structure is too large, fine particles may not meet the required amount of fine particles inserted between layers of the carbon material. Meanwhile, when the weight of fine particles is too large, the rate of fine particles that do not contribute to a composite body increases; therefore, effects as the composite body described above may not appear.

In the present invention, it is preferable that the fine particles exist between graphene layers of a carbon material having a graphene layered structure. When a carbon material is partially exfoliated graphite, at least a portion of fine particles preferably exist between graphene layers exfoliated from the carbon material or between graphene layered products. However, at least a portion of fine particles may exist between a graphene exfoliated from the carbon material and a graphene layered product.

In the above-mentioned composite body, fine particles preferably exist both between graphene layers exfoliated from the partially exfoliated graphite or between graphene layered products and on the surface of the above-mentioned carbon material. When fine particles exist between the graphene layers or graphene layered products of the partially exfoliated graphite, the specific surface area of a composite body can be further increased. Since fine particles exist on the carbon material surface, aggregation of carbon materials with one another can be further suppressed.

(Method for producing composite body)

A method of conjugating a carbon material having a graphene layered structure and fine particles is not particularly limited, and examples thereof include a method of mixing the carbon material having a graphene layered structure and the fine particles.

Examples of the mixing method include a dry method in which both powders are kneaded, a semi-wet method in which one of the powders is dispersed in water or an organic solvent, and a wet method in which both powders are dispersed in water or an organic solvent. In the carbon material having a graphene layered structure, the wet method is preferred because a gap between graphene layers is enlarged by a solvent.

For example, when the carbon material having a graphene layered structure and fine particles are conjugated using partially exfoliated graphite, the following methods 1 and 2 may be mentioned.

Method 1: A composite body is produced in the same manner as in the method for producing an exfoliated graphite-resin composite material described in WO 2014/034156, except that a polymer (resin) is grafted after fine particles are previously mixed with graphite or primary exfoliated graphite which are raw materials of resin-remaining partially exfoliated graphite.

Method 2: Resin-remaining partially exfoliated graphite is produced in accordance with the method for producing an exfoliated graphite-resin composite material described in WO 2014/034156. Next, the obtained partially exfoliated graphite is mixed with fine particles. Examples of the mixing method include a dry method in which both powders are kneaded, a semi-wet method in which one of the powders is dispersed in water or an organic solvent, and a wet method in which both powders are dispersed in water or an organic solvent. The wet method is preferred because a gap between graphene layers is enlarged by a solvent.

A remaining resin and the like may be decomposed by processing the obtained mixture further by heating, decomposition by oxidation or reduction, dissolution and the like. At this time, the pyrolysis temperature of fine particles is preferably higher than the pyrolysis temperature of the resin in the resin-remaining partially exfoliated graphite. When heat treatment is performed as a step of removing the resin from a mixture, the heat treatment is preferably performed at a heating temperature higher than the pyrolysis temperature of the resin and lower than the pyrolysis temperatures of the carbon material having a graphene layered structure and the fine particles. Only the resin can be removed selectively easily by heating in such a temperature range, and the amount of remaining resin can be adjusted.

The composite body of the present invention can be obtained by conjugating the carbon material having a graphene layered structure and fine particles and then, for example, performing activation treatment. The method of the activation treatment is not particularly limited, and examples thereof include a chemical activation method and a gas activation method. Among them, the alkali activation method is preferable from the viewpoint of more effectively increasing the specific surface area of the obtained composite body.

An activator used in an alkali activation method is not particularly limited, and examples of the activator include sodium hydroxide, potassium hydroxide, zinc chloride, and potassium carbonate. In particular, when conjugated with a resin, the activator is preferably potassium carbonate from the viewpoint of further effectively increasing the surface specific area of the composite body only at high temperatures during activation treatment without affecting the resin, to be conjugated, at normal temperature.

In the alkali activation method, the activation treatment is performed by mixing such an activator and a composite body. At this time, the activation treatment may be performed in a state in which the activator and the composite body are mixed physically, or in a state in which the activator is impregnated in the composite body. From the viewpoint of being capable of more effectively increasing the specific surface area of the composite body to be obtained, it is preferable to perform the activation treatment in the state in which the activator is impregnated in the composite body.

The activation treatment temperature in the alkali activation method can be, for example, 500°C to 900°C. The holding time at the temperature can be, for example, 30 minutes to 300 minutes. The activation treatment is preferably performed in an inert gas atmosphere such as nitrogen gas or argon gas.

An activator used for a gas activation method is not particularly limited, and examples thereof include carbon dioxide, water vapor, and combustion gas.

The activation treatment temperature in the gas activation method can be, for example, 600°C to 900°C. The holding time at the temperature can be, for example, 30 minutes to 300 minutes.

The composite body of the present invention can further increase the capacity of the electricity storage device and improve the rate characteristics when used for an electrode of the electricity storage device. Thus, the composite body of the present invention can be used suitably as an electrode material for electricity storage devices.

In the present invention, the resin contained in the composite body is not particularly limited, and examples thereof include polypropylene glycol, polyethylene glycol, polyglycidyl methacrylate, vinyl acetate polymers (polyvinyl acetate), polybutyral (butyral resin), polyacrylic acid, styrene polymers (polystyrene), styrene butadiene rubber, polyimide resins, polytetrafluoroethylene, and fluorine-based polymers such as polyvinylidene fluoride. A portion of these resins may be carbonized.

In the present invention, the amount of the resin contained in the composite body is preferably 1% by weight or more, and more preferably 3% by weight or more, and preferably 80% by weight or less, more preferably 70% by weight or less, and still more preferably 60% by weight or less. When the amount of the resin is equal to or more than the above lower limit and equal to or less than the above upper limit, battery characteristics of the electricity storage device can be further enhanced.

[Electrode material for electricity storage devices and electricity storage device]

The electricity storage device of the present invention is not particularly limited, and examples thereof include non-aqueous electrolyte primary batteries, aqueous electrolyte primary batteries, non-aqueous electrolyte secondary batteries, aqueous electrolyte secondary batteries, capacitors, electric double layer capacitors, and lithium ion capacitors. The electrode material for electricity storage devices of the present invention is an electrode material used for electrodes of the electricity storage device as described above.

Since the electricity storage device of the present invention includes an electrode composed of an electrode material for electricity storage devices including the composite body of the present invention, the capacity is increased, and rate characteristics are improved.

In particular, since the composite body contained in the electrode material for electricity storage devices has a large specific surface area as described above, the capacity of a capacitor or a lithium ion secondary battery can be effectively increased. Examples of the capacitor include an electric double layer capacitor.

The electrode material for electricity storage devices can be used as an electrode of an electricity storage device by being formed including a binder resin and a solvent as needed in the composite body of the present invention.

The forming of the electrode material for electricity storage devices may be performed, for example, by forming into sheet shape with a rolling roller followed by drying. The forming of the above electrode material for electricity storage devices can also be performed by coating a current collector with a coating liquid including the composite body of the present invention, a binder resin, and a solvent followed by drying.

As the binder resin, for example, fluorine-based polymers such as polybutyral, polytetrafluoroethylene, styrene butadiene rubber, polyimide resin, acrylic resin, and polyvinylidene fluoride, water-soluble carboxymethyl cellulose, and the like can be used. Preferably, polytetrafluoroethylene can be used. When polytetrafluoroethylene is used, dispersibility and heat resistance can be further improved.

The amount of the binder resin incorporated is preferably within the range from 0.3 to 40 parts by weight, more preferably within the range from 0.3 to 15 parts by weight, relative to 100 parts by weight of the composite body. When the amount of the binder resin incorporated is within the above range, the capacity of the electricity storage device can be further increased.

As the solvent, ethanol, N-methylpyrrolidone (NMP), water or the like can be used.

When an electricity storage device is used for a capacitor, as an electrolyte solution for the capacitor, an aqueous system may be used, or a non-aqueous system (organic system) may be used.

The aqueous electrolyte solution may be, for example, an electrolyte solution using water as a solvent and sulfuric acid or potassium hydroxide as an electrolyte.

On the other hand, as the non-aqueous electrolyte solution, those using the following solvent, electrolyte and an ionic liquid can be used, for example. Specifically, examples of the solvent include acetonitrile, propylene carbonate (PC), ethylene carbonate (EC), dimethyl carbonate (DMC), diethyl carbonate (DEC), and acrylonitrile (AN).

Examples of the electrolyte include lithium hexafluorophosphate ($LiPF_6$), lithium tetrafluoroborate ($LiBF_4$), tetra-ethylammonium tetrafluoroborate ($TEABF_4$), and triethylmethylammonium tetrafluoroborate ($TEMABF_4$).

Furthermore, as the ionic liquid, for example, an ionic liquid having the following cation and anion can be used. Examples of the cation include imidazolium ion, pyridinium ion, ammonium ion, and phosphonium ion. Examples of the anions include boron tetrafluoride ion ($BF_4^-$), boron hexafluoride ion ($BF_6^-$), aluminum tetrachloride ion ($AlCl_4^-$), tantalum hexafluoride ion ($TaF_6^-$), and tris(trifluoromethanesulfonyl)methane Ion ($C(CF_3SO_2)_3^-$). When the ionic liquid is used, a driving voltage can be further improved in the electricity storage device. That is, energy density can be further improved.

Next, the present invention will be clarified by way of specific examples and comparative examples of the present invention. The present invention should not be construed as limited to the following examples.

(Example 1)

Expanded graphite of 4 g (manufactured by Toyo Tanso Co., Ltd., product name "PF powder 8", BET specific surface area = 22 $m^2$/g), polyethylene glycol of 80 g (PEG, manufactured by Wako Pure Chemical Industries, Ltd.), and water of 80 g as a solvent were mixed to prepare a raw material composition. The prepared raw material composition was irradiated with ultrasound using an ultrasonic treatment apparatus (manufactured by HONDA ELECTRONICS CO., LTD.) at 100 W and an oscillation frequency of 28 kHz for 6 hours. The polyethylene glycol was adsorbed onto the expanded graphite by the ultrasonic irradiation. Thus, a composition in which the polyethylene glycol is adsorbed onto the expanded graphite was prepared.

After the ultrasonic irradiation, the composition was kept at a temperature of 150°C for 3 hours. Thus, water in the composition in which the polyethylene glycol was adsorbed on the expanded graphite was dried. Next, a heating step of maintaining the dried composition at a temperature of 370°C for 2 hours was conducted. Thereby, the polyethylene glycol was pyrolyzed to obtain partially exfoliated graphite. In the partially exfoliated graphite, a portion of polyethylene glycol (resin) remains.

The obtained 0.3 g of partially exfoliated graphite was dispersed in 15 g of tetrahydrofuran (THF). To the obtained dispersion was added a dispersion separately obtained by dispersing 0.15 g of carbon black as fine particles (the median size 500 nm) in THF, and partially exfoliated graphite (resin percentage 65% by weight) and carbon black were mixed at a weight ratio of 4 : 1. After the solvent was removed from the resulting mixed solution by filtration, vacuum drying was carried out to obtain a composite body.

Next, 0.5 g of the obtained composite body was immersed in an aqueous potassium carbonate solution prepared by dissolving 0.5 g of potassium carbonate ($K_2CO_3$, manufactured by Wako Pure Chemical Industries, Ltd.) as an activator in 10.0 g of water. At that time, the weight ratio of potassium carbonate to partially exfoliated graphite was set equal (= impregnation ratio of 1).

Next, the composite body in which potassium carbonate was immersed was held at a temperature (carbonization/activation temperature) of 800°C for 60 minutes in a nitrogen atmosphere. Thus, the activation treatment was performed on the partially exfoliated graphite to obtain the composite body of Example 1.

The content of the resin (resin amount) in the obtained composite body was confirmed in the following manner using a thermo-gravimetric/differential thermal analyzer (manufactured by Hitachi High-Tech Science Corporation, product name "STA7300").

About 2 mg of the composite body was weighed in a platinum pan. The sample was measured from 30°C to 1000°C in a nitrogen atmosphere at a temperature rising rate of 10°C/min. From the results of the differential thermal analysis obtained by the measurement, combustion temperatures of the resin (polyethylene glycol) and the partially exfoliated graphite were separated, and the resin amount (% by weight) in the entire composite body was calculated from a concomitant thermogravimetric change. In Example 1, the resin amount was 42.0% by weight. In the entire composite body, the carbon material (partially exfoliated graphite) was 29% by weight, and fine particles were 29% by weight. The ratio of each example and comparative example is shown in Table 1 below.

(Example 2)

Expanded graphite of 4 g (manufactured by Toyo Tanso Co., Ltd., product name "PF powder 8", BET specific surface area = 22 $m^2$/g), carbon black of 4 g (median size: 500 nm) as fine particles, polyethylene glycol of 80 g (PEG, manufactured by Wako Pure Chemical Industries, Ltd.), and water of 80 g as a solvent were mixed to prepare a raw material composition. The prepared raw material composition was irradiated with ultrasound using an ultrasonic treatment apparatus (manufactured by HONDA ELECTRONICS CO., LTD.) at 100 W and an oscillation frequency of 28 kHz for 6 hours. The polyethylene glycol was adsorbed onto the expanded graphite by the ultrasonic irradiation. Thus, a composition in which the polyethylene glycol is adsorbed onto the expanded graphite was prepared.

After the ultrasonic irradiation, the composition was kept at a temperature of 150°C for 3 hours. Thus, water in the composition in which the polyethylene glycol was adsorbed on the expanded graphite was dried. Next, a heating step of maintaining the dried composition at a temperature of 370°C for 2 hours was conducted. Thus, polyethylene glycol described above was pyrolyzed to obtain a composite body of partially exfoliated graphite and fine particles. In the partially exfoliated graphite, a portion of polyethylene glycol (resin) remains.

The obtained composite body was subjected to activation treatment in the same manner as in Example 1 to obtain a composite body of Example 2. The resin amount measured in the same manner as in Example 1 was 43% by weight.

(Example 3)

A composite body of Example 3 was obtained in the same manner as in Example 1, except that activated carbon (median size 2 um) was used instead of carbon black as fine particles. The resin amount measured in the same manner as in Example 1 was 40% by weight.

(Example 4)

A composite body of Example 4 was obtained in the same manner as in Example 1, except that the temperature of the activation treatment (carbonization/activation temperature) was 700°C and the holding time was 180 minutes. The resin amount measured in the same manner as in Example 1 was 44% by weight.

(Example 5)

A composite body of 0.5 g before activation treatment obtained in the same manner as in Example 1 was immersed in an aqueous potassium carbonate solution prepared by dissolving 1.0 g of potassium carbonate as an activator in 5.0 g of water. As a result, a composite body of Example 5 was obtained in the same manner as in Example 1, except that the weight ratio of potassium carbonate to partially exfoliated graphite was doubled (= impregnation ratio of 2). The resin amount measured in the same manner as in Example 1 was 46% by weight.

(Example 6)

For a composite body before activation treatment obtained in the same manner as in Example 1, potassium carbonate as an activator was used in the form of powder without being dissolved in water. A composite body of Example 6 was obtained in the same manner as in Example 1, except that 0.5 g of the composite body before activation treatment and 0.5 g of potassium carbonate as an activator were shaken in a container, physically mixed, and subjected to activation treatment. The resin amount measured in the same manner as in Example 1 was 36% by weight.

(Example 7)

A composite body of Example 7 was obtained in the same manner as in Example 5, except that potassium hydroxide (KOH, manufactured by Wako Pure Chemical Industries, Ltd.) was used instead of potassium carbonate as an activator. The resin amount measured in the same manner as in Example 1 was 34% by weight.

(Example 8)

A composite body of Example 8 was obtained in the same manner as in Example 5, except that zinc chloride ($ZnCl_2$, manufactured by Wako Pure Chemical Industries, Ltd.) was used instead of potassium carbonate as an activator and the activation temperature was 550°C. The resin amount measured in the same manner as in Example 1 was 46% by weight.

(Example 9)

A composite body was obtained in the same manner as in Example 1, except that carbon dioxide gas ($CO_2$) was used instead of potassium carbonate as an activator and gas activation was performed. Specifically, 0.5 g of a composite body before activation treatment obtained in the same manner as in Example 1 was held at a temperature (carbonization/activation temperature) of 800°C for 120 minutes in a carbon dioxide gas atmosphere. Thus, the activation treatment was performed to obtain the composite body of Example 9. The resin amount measured in the same manner as in Example 1 was 34% by weight.

(Comparative Example 1)

A composite body before activation treatment obtained in the same manner as in Example 1 was used as a composite body of Comparative Example 1 without being subjected to activation treatment. The resin amount measured in the same manner as in Example 1 was 50% by weight.

(Comparative Example 2)

A partially exfoliated graphite obtained in the same manner as in Example 1 was subjected to the same activation treatment as in Example 1 without being conjugated with fine particles, and the partially exfoliated graphite was used as a composite body of Comparative Example 2 (composite body of graphite and resin). The resin amount measured in the same manner as in Example 1 was 65% by weight.

(Evaluation)

BET specific surface area;

The BET specific surface area of the composite body obtained in each of Examples 1 to 9 and Comparative Examples 1 and 2 was measured using a specific surface area measuring apparatus (product number "ASAP-2000" manufactured by Shimadzu Corporation, nitrogen gas).

Evaluation of mesopores and micropores;

The volume of mesopores and micropores of the composite body was measured according to the BJH method using a pore distribution measurement apparatus (manufactured by Shimadzu Corporation, product number "ASAP-2000", nitrogen gas).

The results are shown in the following Table 1.

Evaluation of electrostatic capacity;

An electrostatic capacity of an electric double layer capacitor using the composite bodies obtained in Examples 1 to 9 and Comparative Examples 1 and 2 was measured.

Specifically, the composite bodies of Examples 1 to 9 and Comparative Examples 1 and 2 and PTFE (manufactured by Du Pont-Mitsui Fluorochemical Company Ltd.) as a binder were kneaded at a weight ratio of 9 : 1 and formed into a film using a rolling roller to obtain a capacitor electrode. The film thickness of the obtained electrode was adjusted to 100 um to 200 um.

The obtained capacitor electrode was vacuum dried at 110°C for 11 hours. Thereafter, two circles having a diameter of 1 cm were cut out, and the weights thereof were measured. The weight difference between the two sheets of the capacitor electrodes was maintained within 0.3 mg. Next, a cell was assembled by inserting a separator between the two sheets of the capacitor electrodes as a negative electrode and a positive electrode. Thereafter, an electric double layer capacitor was manufactured by pouring 1.2 ml of an electrolyte solution into the cell. These operations were performed under a condition of a dew point of -70°C or less.

When the electrostatic capacity of the electric double layer capacitor was measured, a control current value was set to 10 mA/g (a current of 10 mA per 1 g of the electrode weight was applied) and 500 mA/g, and in the measurement of repeated charging and discharging characteristics between 0 V and 3 V, 3 cycles were carried out respectively. Thus, the obtained measurement result was calculated using the following formula (1) after setting the calculation range to 1 V to 2 V. The electrostatic capacity described in Table 1 is a value calculated under the condition of a control current value of 10 mA/g.

$$C = I/(\Delta V/\Delta t) \ ... \ \text{formula (1)}$$

(In the formula (1), C is an electrostatic capacity, the unit is F, I is a discharge current value, and the unit is A. $\Delta V$ is a difference between a start voltage value and an end voltage value in a calculation range, has a unit of V, and is 1 because the range is from 2 V to 1 V. $\Delta t$ is the time required to discharge from the start voltage value to the end voltage value, and the unit is seconds.)

The electrostatic capacity per weight was a value obtained by dividing the electrostatic capacity calculated by the above formula (1) by a total weight of the negative electrode and the positive electrode.

Evaluation of rate characteristics;

The rate characteristics were evaluated from the electrostatic capacity per weight obtained as described above. In the evaluation of the rate characteristics, when the control current value was set to 10 mA/g, the electrostatic capacity was $C_A$, when the control current value was set to 500 mA/g, the electrostatic capacity was $C_B$, and a value of $C_A/C_B$ was calculated. The rate characteristics were determined based on the following criteria.

[Assessment criteria for rate characteristics]

Excellent: Rate characteristics ($C_A/C_B$) are 0.7 or more
Good: Rate characteristics ($C_A/C_B$) are 0.5 or more and less than 0.7
Poor: Rate characteristics ($C_A/C_B$) are less than 0.5

The results are shown in the following Table 1.

[Table 1]

| | Carbon material having graphene layered structure | Fine particle | Resin | Ratio (wt&) Carbon material/ fine particle/ resin | Activator | Impregnation ratio [-] | Impregnation method | Carbonization /activation temperature [°C] | Holding time [min] | Pore structure | | | Electrostatic capacity [F/g] | Rate characteristics |
|---|---|---|---|---|---|---|---|---|---|---|---|---|---|---|
| | | | | | | | | | | BET specific surface area [m$^2$/g] | Volume of micropore [mL/g] | Volume of mesopore [mL/g] | | |
| Example 1 | Partially exfoliated graphite | Carbon black | Presence | 29/29/42 | $K_2CO_3$ | 1 | Impregnation | 800 | 60 | 1310 | 0.509 | 0.626 | 26.2 | Excellent |
| Example 2 | Partially exfoliated graphite | Carbon black | Presence | 28.5/28.5/43 | $K_2CO_3$ | 1 | Impregnation | 800 | 60 | 987 | 0.545 | 0.262 | 19.5 | Good |
| Example 3 | Partially exfoliated graphite | Activated carbon | Presence | 30/30/40 | $K_2CO_3$ | 1 | Impregnation | 800 | 60 | 1176 | 0.698 | 0.302 | 23.0 | Excellent |
| Example 4 | Partially exfoliated graphite | Carbon black | Presence | 28/28/44 | $K_2CO_3$ | 1 | Impregnation | 700 | 180 | 1280 | 0.527 | 0.620 | 25.6 | Excellent |
| Example 5 | Partially exfoliated graphite | Carbon black | Presence | 27/27/46 | $K_2CO_3$ | 2 | Impregnation | 800 | 60 | 1351 | 0.517 | 0.695 | 27.2 | Excellent |
| Example 6 | Partially exfoliated graphite | Carbon black | Presence | 32/32/36 | $K_2CO_3$ | 1 | Physical mixing | 800 | 60 | 911 | 0.459 | 0.510 | 18.0 | Excellent |
| Example 7 | Partially exfoliated graphite | Carbon black | Presence | 33/33/34 | KOH | 2 | Impregnation | 800 | 60 | 1075 | 0.464 | 0.652 | 21.5 | Excellent |

(continued)

| | Carbon material having graphene layered structure | Fine particle | Resin | Ratio (wt&) Carbon material/ fine particle/ resin | Activator | Impregnation ratio [-] | Impregnation method | Carbonization /activation temperature [°C] | Holding time [min] | Pore structure | | | Electrostatic capacity [F/g] | Rate characteristics |
|---|---|---|---|---|---|---|---|---|---|---|---|---|---|---|
| | | | | | | | | | | BET specific surface area [m²/g] | Volume of micropore [mL/g] | Volume of mesopore [mL/g] | | |
| Example 8 | Partially exfoliated graphite | Carbon black | Presence | 27/27/46 | $ZnCl_2$ | 2 | Impregnation | 550 | 60 | 1276 | 0.509 | 0.616 | 25.3 | Excellent |
| Example 9 | Partially exfoliated graphite | Carbon black | Presence | 33/33/34 | $CO_2$ | - | - | 800 | 120 | 924 | 0.398 | 0.501 | 18.6 | Good |
| Comparative Example 1 | Partially exfoliated graphite | Carbon black | Presence | 25/25/50 | - | - | - | - | - | 420 | 0.495 | 0.138 | 8.4 | Poor |
| Comparative Example 2 | Partially exfoliated graphite | Absence | Presence | 35/0/65 | $K_2CO_3$ | 1 | Impregnation | 800 | 60 | 324 | 0.127 | 0.043 | 3.1 | Poor |

EP 3 699 940 B1

13

As is apparent from Table 1, in the composite bodies of Examples 1 to 9, the BET specific surface area is larger than those of the composite bodies of Comparative Examples 1 and 2, and it has been confirmed that the capacity of the electricity storage device can be increased. Furthermore, as is apparent from Table 1, it has been confirmed that in the composite bodies of Examples 1 to 9, the electrostatic capacity and the rate characteristics are improved as compared with the composite bodies of Comparative Examples 1 and 2.

**Claims**

1. A composite body comprising:

   a carbon material having a graphene layered structure; and
   fine particles,
   the composite body having mesopores, the mesopores having a specific volume measured in accordance with BJH method of 0.15 mL/g or more, and the composite body having a BET specific surface area of 900 m$^2$/g or more, wherein
   the fine particles are at least one kind selected from the group consisting of activated carbon, carbon black, graphene oxide, graphite, graphite oxide, metal oxides, zeolite oxide, and tungstophosphoric acid,
   a median size of the fine particles is 10 nm or more and less than 20 μm, and
   the carbon material is partially exfoliated graphite which has a graphite structure and in which graphite is partially exfoliated.

2. The composite body according to claim 1, wherein the fine particles are at least one kind selected from the group consisting of activated carbon, carbon black and graphene oxide.

3. The composite body according to claim 1 or 2, wherein in the composite body, the fine particles exist between graphene layers of the carbon material having a graphene layered structure.

4. The composite body according to any one of claims 1 to 3, wherein a weight ratio of the fine particles to the carbon material having a graphene layered structure is 1/20 or more and 2 or less.

5. The composite body according to any one of claims 1 to 4, wherein the carbon material having a graphene layered structure includes a resin and/or a carbonization product derived from a resin.

6. The composite body according to claim 5, wherein a content of the resin and/or the carbonization product derived from a resin in the carbon material having a graphene layered structure is 1% by weight or more and 80% by weight or less.

7. An electrode material for electricity storage devices, comprising the composite body according to any one of claims 1 to 6.

8. An electricity storage device comprising an electrode including the electrode material for electricity storage devices according to claim 7.

**Patentansprüche**

1. Verbundkörper, umfassend:

   ein Kohlenstoffmaterial mit einer Graphen-Schichtstruktur; und
   Feinpartikel,
   wobei der Verbundkörper Mesoporen aufweist, wobei die Mesoporen ein nach dem BJH-Verfahren gemessenes spezifisches Volumen von 0,15 mL/g oder mehr aufweisen und der Verbundkörper eine spezifische BET-Oberfläche von 900 m$^2$/g oder mehr aufweist, wobei
   die Feinpartikel mindestens eine Art sind, ausgewählt aus der Gruppe bestehend aus Aktivkohle, Ruß, Graphenoxid, Graphit, Graphitoxid, Metalloxiden, Zeolithoxid und Wolframatophosphorsäure,
   die mittlere Größe der Feinpartikel 10 nm oder mehr und weniger als 20 μm beträgt, und
   das Kohlenstoffmaterial teilweise exfolierter Graphit ist, der eine Graphitstruktur aufweist und in dem Graphit teilweise exfoliert ist.

**2.** Verbundkörper nach Anspruch 1, wobei die Feinpartikel mindestens eine Art sind, ausgewählt aus der Gruppe bestehend aus Aktivkohle, Ruß und Graphenoxid.

**3.** Verbundkörper nach Anspruch 1 oder 2, wobei in dem Verbundkörper die Feinpartikel zwischen Graphenschichten des Kohlenstoffmaterials mit einer Graphen-Schichtstruktur vorliegen.

**4.** Verbundkörper nach einem der Ansprüche 1 bis 3, wobei das Gewichtsverhältnis der Feinpartikel zum Kohlenstoffmaterial mit einer Graphen-Schichtstruktur 1/20 oder mehr und 2 oder weniger beträgt.

**5.** Verbundkörper nach einem der Ansprüche 1 bis 4, wobei das Kohlenstoffmaterial mit einer Graphen-Schichtstruktur ein Harz und/oder ein aus einem Harz gewonnenes Karbonisierungsprodukt enthält.

**6.** Verbundkörper nach Anspruch 5, wobei der Gehalt des Harzes und/oder des aus einem Harz gewonnenen Karbonisierungsprodukts in dem Kohlenstoffmaterial mit einer Graphen-Schichtstruktur 1 Gew.-% oder mehr und 80 Gew.-% oder weniger beträgt.

**7.** Elektrodenmaterial für Elektrizitätsspeichervorrichtungen, umfassend den Verbundkörper nach einem der Ansprüche 1 bis 6.

**8.** Elektrizitätsspeichervorrichtung, umfassend eine Elektrode, die das Elektrodenmaterial für Elektrizitätsspeichervorrichtungen nach Anspruch 7 enthält.

**Revendications**

**1.** Corps composite comportant :

une matière carbonée ayant une structure en couches de graphène ; et
des particules fines,
le corps composite ayant des mésopores, les mésopores ayant un volume spécifique mesuré conformément à la méthode BJH de 0,15 mL/g ou plus, et le corps composite ayant une surface spécifique BET de 900 m$^2$/g ou plus, dans lequel
les particules fines sont au moins un type choisi parmi le groupe constitué de carbone activé, de noir de carbone, d'oxyde de graphène, de graphite, d'oxyde de graphite, d'oxydes métalliques, d'oxyde de zéolithe et d'acide tungstophosphorique,
une taille médiane des particules fines est de 10 nm ou plus et de moins de 20 $\mu$m, et
la matière carbonée est du graphite partiellement exfolié qui a une structure de graphite et dans laquelle le graphite est partiellement exfolié.

**2.** Corps composite selon la revendication 1, dans lequel les particules fines sont au moins un type choisi parmi le groupe constitué de carbone activé, de noir de carbone et d'oxyde de graphène.

**3.** Corps composite selon la revendication 1 ou 2, dans lequel dans le corps composite, les particules fines existent entre des couches de graphène de la matière carbonée ayant une structure en couches de graphène.

**4.** Corps composite selon l'une quelconque des revendications 1 à 3, dans lequel un rapport pondéral des particules fines sur la matière carbonée ayant une structure en couches de graphène est de 1/20 ou plus et de 2 ou moins.

**5.** Corps composite selon l'une quelconque des revendications 1 à 4, dans lequel la matière carbonée ayant une structure en couches de graphène inclut une résine et/ou un produit de carbonisation dérivé d'une résine.

**6.** Corps composite selon la revendication 5, dans lequel une teneur de la résine et/ou du produit de carbonisation dérivé d'une résine dans la matière carbonée ayant une structure en couches de graphène est de 1 % en poids ou plus et de 80 % en poids ou moins.

**7.** Matériau d'électrode pour dispositifs de stockage d'électricité, comportant le corps composite selon l'une quelconque des revendications 1 à 6.

8. Dispositif de stockage d'électricité comportant une électrode incluant le matériau d'électrode pour dispositifs de stockage d'électricité selon la revendication 7.

**EP 3 699 940 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005347517 A
- US 2009059474 A1
- WO 2017090553 A1
- WO 2016143423 A
- WO 2015098758 A
- WO 2017090553 A
- WO 2014034156 A